# EUROPÄISCHE PATENTSCHRIFT

(11) **EP 0 450 565 B1**
(45) Veröffentlichungstag und Bekanntmachung des Hinweises auf die Patenterteilung: **12.07.2000**
(21) Anmeldenummer: 91105177.9
(22) Anmeldetag: 02.04.1991
(51) Int. Cl.: G01N 1/10, G01N 35/08, G01N 1/28

(54) **Verfahren zum taktkontinuierlichen Entnehmen flüssiger Proben und deren pneumatisches Fördern**
Method for continuously sampling liquids and pneumatically conveying them
Procédé de prélèvement continu de doses d'échantillons liquides et leur transport pneumatique

(30) Priorität: 04.04.1990 DE 4010832
(43) Veröffentlichungstag der Anmeldung: 09.10.1991
(73) Patentinhaber: HOECHST AKTIENGESELLSCHAFT, 65926 Frankfurt am Main (DE)
(72) Erfinder: Melzer, Werner, Dr., W-6237 Liederbach (DE); Ständecke, Wilfried, W-6200 Wiesbaden (DE); Uhmann, Rainer, Dr., W-6239 Kriftel (DE)

(56) Entgegenhaltungen:
- WO-A-83/03057
- GB-A- 2 010 116
- US-A- 3 795 349
- US-A- 4 148 610
- US-A- 4 526 754
- PATENT ABSTRACTS OF JAPAN, Band 007, Nr. 275 (M-261), 8. Dezember 1983; & JP-A-58 152 713 (NIHON AIR SHIYUUTAA K.K.) 10-09-1983

## Beschreibung

Gegenstand der Erfindung ist ein Verfahren und eine Vorrichtung zum taktkontinuierlichen Entnehmen kleiner Proben aus einem Produktstrom und deren pneumatisches Fördern zu einem Analysengerät.

Für die online-Analyse flüssiger chemischer oder biochemischer Produkte müssen Analysenproben aus dem Produktionsbereich heraus vollautomatisch über oft große Entfernungen (50 m und mehr) zu den Analysengeräten im Labor transportiert werden (vgl. US-A-3 795 349). Aus Kostengründen dürfen nur kleinvolumige Proben entnommen bzw. Probenströme bewegt werden.

Aus der GB-A-2 010 116 ist bekaunt, das Trägergas eines Gaschromatographen in einem Kreislauf zu recyceln.

Das erfindungsgemäße Verfahren ist in Anspruch 1 definiert.

Der Probe kann in zeitlichem Abstand eine Flüssigkeitssäule einer zweiten Flüssigkeit (Waschflüssigkeit oder Verdünnungsflüssigkeit) nachgeführt werden und das Inertgas in einem dem Analysengerät nachgeschalteten Flüssigkeitsabscheider von den Flüssigkeiten abgetrennt und dem Röhrensystem als Fördermedium wieder zugeführt werden. Vor Einleiten in das Röhrensystem kann die Probe verdünnt werden.

Das Analysengerät kann über eine Entnahmeeinrichtung mit der Förderleitung verbunden sein und der Entnahmeeinrichtung kann ein Flüssigkeitsabscheider nachgeschaltet sein, dessen gasseitiger Ausgang mit der Saugseite der Gasförderpumpe verbunden ist. Im Röhrensystem kann eine Vorlage vorgeschaltet sein, deren Eingangsseite mit der Entnahme- und Dosiervorrichtung sowie mit einer zweiten Dosiervorrichtung für Verdünnungs- oder Waschflüssigkeit und einem zur Saugseite der Gasförderpumpe führenden Bypass verbunden ist. Zusätzlich zu den bereits erwähnten Dosiervorrichtungen kann auf der Eingangsseite der Vorlage eine Dosiervorrichtung für Kalibrierflüssigkeit angeordnet sein.

Die Vorteile der Erfindung sind im wesentlichen darin zu sehen, daß kleine Flüssigkeitsvolumina von 0,5 ml bis 1 ml bis zu 50 m und mehr von der Probeentnahmestelle zum Analysengerät taktweise gefördert werden können und daß die unverdünnte Probe einem Volumen von typisch 50-100 µl entspricht, wobei das Inert gas von den Flüssigkeiten abgetrennt und dem Röhrensystem als Fördermedium weider zugeführt wird.

Das Röhrensystem kann durch Parallelschaltung auf einfache Weise vergrößert werden, so daß zwei und mehr Analysatoren nach und nach mit Proben versorgt werden können, was eine beträchtliche Erhöhung der Analysenkapazität erlaubt.

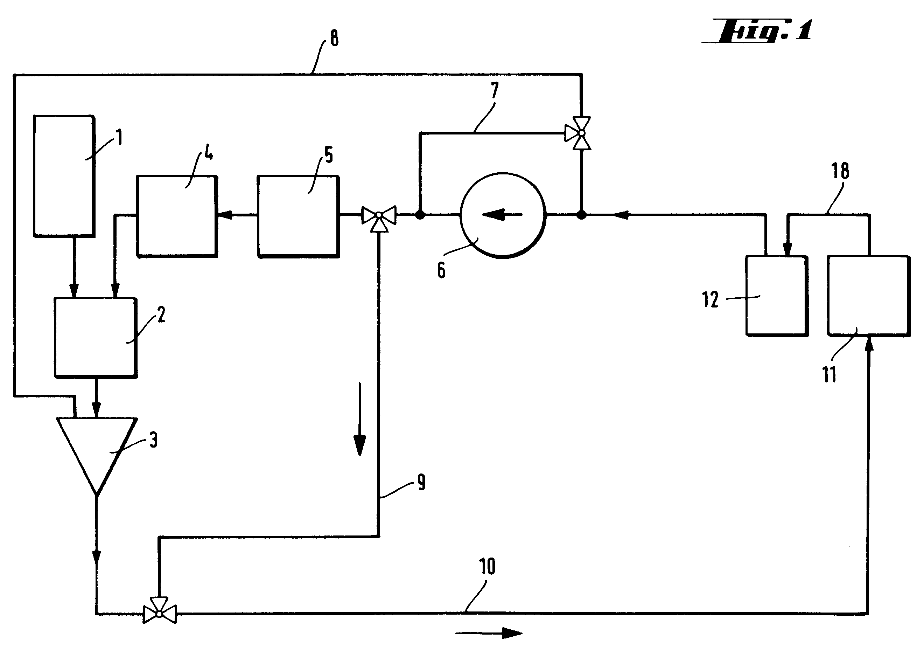

Im Folgenden wird die Erfindung anhand von lediglich einen Ausführungsweg zeigender Zeichnungen näher erläutert.
Es zeigt
- Figur 1: ein Fließschema der Vorrichtung und

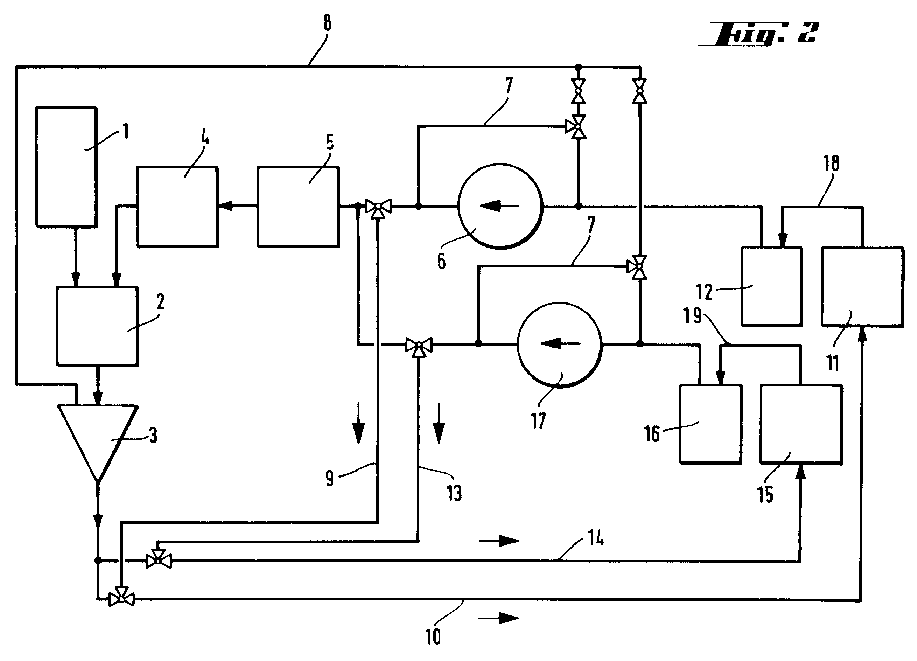

- Figur 2: eine Variante von Figur 1 zum Betreiben von zwei Analysengeräten.

Die zu analysierende Probe wird taktkontinuierlich mit einer Entnahme- und Dosiervorrichtung 2 dem Produktstrom bzw. der Produktionsanlage 1 entnommen und in die Vorlage 3 geleitet. In der Vorlage 3 kann die Probe in beliebigem Verhältnis mit Verdünnungsmittel gemischt werden.

Verdünnungsmittel wird über Dosiervorrichtung 5 der Vorlage zugeführt. Von der Vorlage 3 gelangt die Probe in die Förderleitung 10, 14, in die nahe dem Ausgang der Vorlage eine Gasleitung 9, 13 mündet. Über die Gasleitung 9, 13 wird mittels Gaspumpe 6, 17 das Fördermittel, z.B. Inertgas in die Förderleitung 10, 14 gebracht, das die Probe in Form einer Flüssigkeitssäule zum Analysengerät 11, 15, einem Hochdruckflüssigkeitschromatographen, einer Leitfähigkeitszelle, einem Photometer, einem Gaschromatographen, einem Fluoreszenzdetektor oder z.B. einem pH-Meßgerät fördert. Förderleitungen mit 0,6 bis 2 mm Innendurchmesser, Flüssigkeitssäulen von 0,5 bis 1 m Länge und Fördergeschwindigkeiten von 1 bis 3 m/min haben sich als besonders brauchbar erwiesen. Als Leitungen für das Röhrensystem kommen Rohre aus Metall oder Kunststoff, insbesondere Rohre aus Polytetrafluorethylen oder Polytrifluormonochlorethylen oder Schläuche in Betracht. Mit der Dosiervorrichtung 4 können auch Proben zum Kalibrieren der Analysengeräte hergestellt werden. Überschüssiges Probenmaterial gelangt über Leitung 18, 19 in den Abscheider 12, 16, wo die flüssige Probe vom Fördermittel abgetrennt wird. Die Gaspumpe 6, 17 bringt das Fördermittel wieder in die Förderleitung 10, 14 zurück. Zur Belüftung der Vorlage 3 ist die Saugseite der Gaspumpe 6, 17 durch einen Bypass 8 mit der Vorlage 3 verbunden. Zum Anhalten der Probensäule, beispielsweise während der Beschickung des Analysengerätes 11, 15 kann die Gaspumpe 6, 17 durch die Leitung 7 überbrückt werden. Durch Parallelschalten weiterer Förderleitungen, Analysatoren, Abscheider, Gaspumpen und Gasleitungen läßt sich die Vorrichtung beliebig erweitern, um so Leerlauf zwischen den Analysen in einem Analysator zu vermeiden und um einen höheren Probendurchsatz pro Zeit bei nicht kontinuierlich arbeitenden Analysengeräten (z. B. HPLC, GC) zu erreichen.

## Patentansprüche

1. Verfahren zum Entnehmen flüssiger Proben aus einem Produktstrom und deren pneumatisches Fördern in ein Analysengerät, das in ein Röhrensystem integriert ist, wobei man die Proben dem Produktstrom entnimmt, in das Röhrensystem leitet und mittels einer Gasförderpumpe und einem Gas als Fördermedium dem Analysengerät zuführt, wobei die Saugseite der Pumpe über das Röhrensystem mit dem Ausgang des Analysengerätes und die Druckseite der Pumpe über das Röhrensystem mit dem Eingang des Analysengerätes verbunden ist, und anschließend aus dem Röhrensystem abtrennt, wobei man die Proben taktkontinuierlich entnimmt und als Flüssigkeitssäule mit einer Geschwindigkeit von 1 bis 3 m/min durch das Röhrensystem zu dem Analysengerät führt.

2. Verfahren nach Anspruch 1, dadurch gekennzeichnet, daß das Röhrensystem, durch das man die Proben führt, mindestens teilweise einen Innendurchmesser von 0,6 bis 2 mm hat.

3. Verfahren nach Anspruch 1 oder 2, dadurch gekennzeichnet, daß man mindestens eine der Proben vor dem Einleiten in das Röhrensystem verdünnt.

4. Verfahren nach mindestens einem der Ansprüche 1 bis 3, dadurch gekennzeichnet, daß man mindestens einer der Proben in zeitlichem Abstand eine Probe einer zweiten Flüssigkeit nachführt.

## Claims

1. A method for withdrawing liquid samples from a product stream and for their pneumatic conveyance into an analysis device which is integrated into a tube system, the samples being withdrawn from the product stream, passed into the tube system and fed to the analysis device by means of a gas feed pump and a gas as conveying medium, the suction side of the pump being connected via the tube system to the outlet of the analysis device, and the pressure side of the pump being connected via the tube system to the inlet of the analysis device, and the sample subsequently being separated from the tube system, wherein the samples are withdrawn in a continuous cycle and led as a liquid column to the analysis device through the tube system at a speed of 1 to 3 m/min.

2. The method as claimed in claim 1, wherein the tube system through which the samples are led has at least partially an inside diameter of 0.6 to 2 mm.

3. The method as claimed in claim 1 or 2, wherein at least one of the samples is diluted before introduction into the tube system.

4. The method as claimed in at least one of claims 1 to 3, wherein at least one of the samples is followed at a time interval by a sample of a second liquid.

## Revendications

1. Procédé pour le prélèvement d'échantillons liquides dans un écoulement de produit et leur transport pneumatique dans un appareil d'analyse, qui est intégré dans un système de tubes, selon lequel on prélève les échantillons du courant du produit, on les dirige dans le système de tubes et on les envoie au moyen d'une pompe de refoulement à gaz et à l'aide d'un gaz en tant que milieu de transport à l'appareil d'analyse, le côté aspiration de la pompe étant relié par l'intermédiaire du système de tubes à l'intérieur de l'appareil d'analyse et le côté refoulement de la pompe étant relié par l'intermédiaire du système de tubes à l'entrée de l'appareil d'analyse, et on les retire ensuite du système de tubes, et selon lequel on prélève les échantillons d'une manière cadencée continue et on les envoie sous la forme d'une colonne de liquide à une vitesse de 1 à 3 m/mn à l'appareil par l'intermédiaire du système de tubes.

2. Procédé selon la revendication 1, caractérisé en ce que le système de tubes, au moyen duquel on guide les échantillons, possède au moins en partie un diamètre intérieur de 0,6 à 2 mm.

3. Procédé selon la revendication 1 ou 2, caractérisé en ce qu'on dilue au moins l'un des échantillons avant son introduction dans le système de tubes.

4. Procédé selon au moins l'une des revendications 1 à 3, caractérisé en ce qu'on fait suivre au moins l'un des échantillons, à un certain intervalle de temps, par un échantillon d'un second liquide.
